Europäisches Patentamt

European Patent Office

Office européen des brevets

(11) Numéro de publication : **0 414 782 B1**

(12) **FASCICULE DE BREVET EUROPEEN**

(45) Date de publication du fascicule du brevet :
29.01.92 Bulletin 92/05

(51) Int. Cl.⁵ : **B60K 25/06,** F16H 3/72

(21) Numéro de dépôt : **89906138.6**

(22) Date de dépôt : **12.05.89**

(86) Numéro de dépôt international :
**PCT/FR89/00231**

(87) Numéro de publication internationale :
**WO 89/11405 30.11.89 Gazette 89/28**

(54) **BOITE DE VITESSES A VARIATION CONTINUE PAR ENGRENAGES.**

(30) Priorité : **16.05.88 FR 8806515**
**21.12.88 FR 8816988**

(43) Date de publication de la demande :
**06.03.91 Bulletin 91/10**

(45) Mention de la délivrance du brevet :
**29.01.92 Bulletin 92/05**

(84) Etats contractants désignés :
**DE FR GB IT SE**

(56) Documents cités :
**DE-A- 2 742 305**
**DE-A- 3 011 833**
**DE-U- 7 711 621**

(73) Titulaire : **MAT HOLDINGS B.V.**
**Weena 373**
**NL-3013 AL Rotterdam (NL)**

(72) Inventeur : **Antonov, Roumen**
**18 rue de Berri**
**F-75008 Paris (FR)**

(74) Mandataire : **Bouju, André**
**Cabinet André Bouju B.P. 6250**
**F-75818 Paris Cédex 17 (FR)**

**Description**

La présente invention concerne une boîte de vitesses à variation continue par engrenages destinée aux véhicules terrestres tels que l'automobile, les motocyclettes, et analogues.

On connaît d'après le DE-A- 30 11 833 et d'après le FR-A- 692 079 une boite de vitesses automatique, en particulier pour véhicules, comprenant un train d'engrenages de liaison entre un arbre d'entrée et un arbre de sortie, ce train d'engrenages comprenant au moins une roue dentée qui est montée pour répartir la puissance entre l'arbre de sortie de la boîte de vitesses et un sous-ensemble d'équilibrage tournant à une vitesse généralement différente de celle de l'arbre de sortie.

Selon ces documents, le sous-ensemble d'équilibrage est constitué par un volant d'inertie, à inertie fixe ou variable. Selon les affirmations contenues dans ces brevets, l'inertie du volant créerait sur les satellites une force de réaction qui équilibrerait la résistance à l'avancement du véhicule. En d'autres termes, chaque satellite subirait autour de son axe deux couples qui s'équilibrent, l'un dû à l'inertie du volant, l'autre dû à la résistance à l'avancement du véhicule.

Ce type de dispositif ne paraît pas réaliste et c'est probablement la raison pour laquelle il n'a jamais été commercialisé. En effet, le volant d'inertie ne peut opposer une réaction dans le sens souhaité que lorsque sa vitesse augmente. Or, il est impensable que le mouvement du véhicule soit entretenu grâce à une augmentation constante de la vitesse de rotation du volant, car cette vitesse deviendrait rapidement prohibitive. De plus, le moteur, qui serait obligé de suivre le mouvement, s'emballerait également.

Cette difficulté semble avoir été aperçue dans le FR-A- 692 079, qui propose un dispositif centrifuge qui, au-delà d'une certaine vitesse de rotation de l'arbre de sortie, doit assurer un couplage (prise directe) entre le volant d'inertie et l'arbre de sortie. Ce dispositif de prise directe ne permet plus une adaptation automatique du rapport de transmission entre l'arbre d'entrée et l'arbre de sortie. De plus, s'il faut assurer le couplage alors que le volant d'inertie a atteint une vitesse de rotation considérable, la garniture de friction prévue pour assurer le couplage sera sujette à une usure et à un échauffement considérables. Il se pose également le problème de la marche à une vitesse pour laquelle le système centrifuge est à la limite entre l'état de repos et l'état de commande de la prise directe. Il semble difficile dans ce cas d'éviter un fonctionnement avec frottement permanent entre le disque d'embrayage et le volant d'inertie.

On connaît encore d'après le DE-A- 27 42 305 une transmission qui sert à répartir la puissance produite par une turbine à gaz entre les roues d'entraînement d'un véhicule tel qu'un véhicule de chantier, et les prises de force montées sur ce véhicule pour entraîner ses équipements consommateurs de puissance, de façon que les roues puissent continuer à tourner même si la résistance rencontrée par les équipements du véhicule bloque leur arbre d'entraînement. Ce dispositif n'a pas pour but d'optimiser le rapport de transmission entre le moteur du véhicule et les roues. Lorsque les équipements sont bloqués par une surcharge, pour une vitesse donnée du moteur, la vitesse des roues va être accrue alors qu'il n'y a aucune raison pour que cet accroissement de vitesse, entraînant nécessairement une diminution du couple, corresponde à une quelconque nécessité ou opportunité pour le déplacement du véhicule.

Le but de la présente invention est de proposer une boîte de vitesses à engrenages qui régule de manière très simple et très efficace le rapport de transmission entre son entrée et sa sortie en prévoyant dans cette boîte de vitesses un mécanisme du type différentiel dont le troisième arbre est relié à un sous-ensemble d'équilibrage.

Suivant l'invention la boîte de vitesses à variation automatique du rapport de transmission, en particulier pour véhicules, comprenant un train d'engrenages de liaison entre un arbre d'entrée et un arbre de sortie, ce train d'engrenages comprenant au moins une roue dentée qui est montée pour répartir la puissance entre l'arbre de sortie et un sous-ensemble d'équilibrage tournant à une vitesse généralement différente de celle de l'arbre de sortie, des moyens autres que la roue dentée étant prévus pour prélever de l'énergie utile au sous-ensemble d'équilibrage, est caractérisée en ce que la charge constituée par le sous-ensemble d'équilibrage est en permanence, en fonction de la vitesse et de l'accélération, en rapport avec la charge entraînée par l'arbre de sortie, en fonction de la vitesse et de l'accélération.

Par énergie utile, on entend de l'énergie qui est exploitée pour le fonctionnement du véhicule, par exemple pour le fonctionnement de certains accessoires du moteur ou du véhicule, ou encore pour être restituée aux roues motrices en aval de la boîte de vitesses.

L'invention enseigne de mettre en équilibre l'un avec l'autre non pas deux arbres de sortie entraînant des charges aléatoires mais l'arbre de sortie unique avec un sous-ensemble d'équilibrage dont la résistance à la rotation, en fonction de la vitesse et de l'accélération, est choisie pour optimiser le rapport de transmission entre l'entrée et la sortie.

On réalise ainsi de manière étonnamment simple une transmission ayant une aptitude surprenante à établir spontanément entre l'entrée et la sortie un rapport de transmission qui est pertinent à l'égard de la puissance développée par le moteur (qui est décidée par le conducteur par action sur la pédale d'accélérateur) et de la charge résistante rencontrée par l'arbre de sortie et surtout de la structure de cette charge, (c'est-à-dire de la répartition entre la fraction inertielle et la fraction qui est fonction de la vitesse).

Selon un mode de réalisation avantageux de l'invention, les moyens pour prélever de l'énergie au sous-ensemble d'équilibrage comprennent une charge consommatrice d'énergie, en particulier un mécanisme auxiliaire tel que compresseur de suralimentation, ventilateur, pompe à eau de refroidissement, générateur électrique, etc.....

De tels mécanismes auxiliaires offrent la plupart du temps une résistance qui est proportionnelle au carré de leur vitesse de rotation. Il en va de même de la résistance à l'avancement d'un véhicule dans l'air. Moyennant un choix convenable des paramètres de la boîte de vitesses et du mécanisme auxiliaire, il est donc possible de faire en sorte que pour toute vitesse de progression du véhicule, la boîte de vitesses fonctionne en un régime permanent dans lequel la charge consommatrice d'énergie a elle-même une vitesse de rotation constante raisonnable.

De préférence, le sous-ensemble d'équilibrage comporte ou entraîne une charge inertielle. La charge constituée par le véhicule ayant elle-même une composante inertielle, les deux composantes inertielles s'équilibrent dans la boîte de vitesses lors de l'accélération du véhicule.

Ainsi, pour tout régime de fonctionnement du véhicule (combinaison d'une valeur de vitesse et d'une valeur d'accélération), il y a équilibre entre la résistance offerte par le véhicule et la résistance offerte par le sous-ensemble d'équilibrage et la boîte de vitesses trouve d'elle-même un régime de fonctionnement dans lequel le sous-ensemble d'équilibrage n'est jamais entraîné à une vitesse de rotation excessive.

D'autres particularités et avantages de l'invention ressortiront encore de la description ci-après.

Aux dessins annexés, donnés à titre d'exemples non limitatifs :

– la figure 1 est une vue schématique en perspective d'une boîte de vitesses selon l'invention, avec coupe axiale du boîtier ;

– la figure 2 est une vue en coupe axiale, avec arrachement, d'un second mode de réalisation de la boîte de vitesses selon l'invention ;

– la figure 3 est une vue avec demi-coupe axiale d'un troisième mode de réalisation de la boîte de vitesses selon l'invention ;

– la figure 4 est une vue en coupe axiale, avec arrachement, d'un quatrième mode de réalisation de la boîte de vitesses selon l'invention ;

– la figure 5 est une vue schématique en perspective, avec coupe partielle et arrachement, d'un cinquième mode de réalisation de la boîte de vitesses selon l'invention ;

– la figure 6 est une vue en élévation avec coupe axiale partielle du mode de réalisation de la figure 5 ; et

– les figures 7 et 8 sont des vues schématiques d'un sixième et respectivement d'un septième mode de réalisation de la boîte de vitesses selon l'invention.

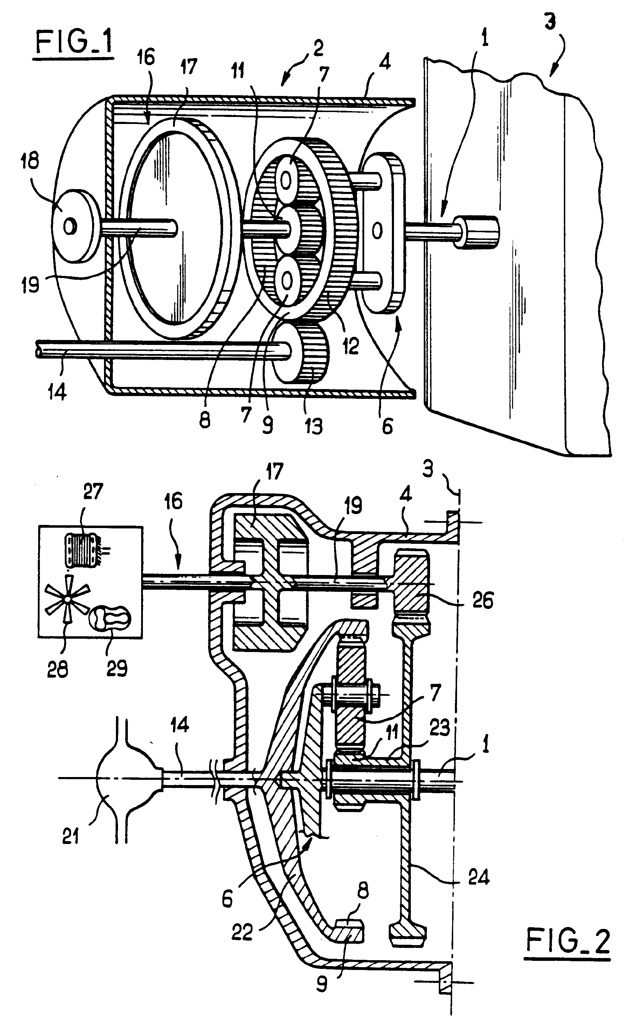

Dans l'exemple représenté à la figure 1, un arbre d'entrée 1 de la boîte de vitesses 2 constitue en même temps l'arbre de sortie d'un moteur représenté schématiquement en 3, qui est typiquement un moteur à combustion interne.

La boîte de vitesses 2 comprend un boîtier 4 qui est fixé au bâti du moteur 3.

L'arbre 1 entraîne en rotation autour de son axe un porte-satellites 6 sur lequel des satellites 7, au nombre de deux diamétralement opposés dans l'exemple, sont montés en rotation libre.

Chaque satellite 7 engrène avec une denture intérieure 8 d'une couronne 9 et avec une roue planétaire 11 dentée extérieurement.

La roue planétaire 11, les deux satellites 7, le porte-satellites 6 et la couronne 9 constituent ainsi un train d'engrenages planétaire.

La couronne 9 comporte également une denture extérieure 12 par laquelle elle engrène avec un pignon 13 relié à un arbre de sortie 14 de la boîte de vitesses 2. La roue planétaire 11 est couplée en rotation avec un sous-ensemble d'équilibrage 16 comprenant un volant d'inertie 17 et une poulie 18 d'entraînement d'un mécanisme auxiliaire consommateur d'énergie tel qu'une génératrice électrique, un ventilateur de refroidissement du moteur, ou encore un compresseur de suralimentation du moteur.

Ainsi, chaque satellite 7 est monté pour répartir la puissance entre l'arbre de sortie 14 de la boîte de vitesses et le sous-ensemble d'équilibrage 16.

En d'autres termes, chaque satellite 7 est soumis sur sa périphérie à deux forces dont les moments sont de sens contraires autour de l'axe du satellite : la force de résistance à la rotation du mécanisme d'équilibrage 16 et la forme de résistance à la rotation de l'arbre de sortie 14. La vitesse de rotation du satellite 7 autour de son propre axe se stabilise lorsque ces forces sont égales.

Pour tout régime de fonctionnement du véhicule (combinaison d'une vitesse et d'une accélération à chaque instant) le véhicule oppose une certaine résistance à l'avancement (proportionnelle au carré de la vitesse en général), et une force d'inertie lorsque l'accélération est positive. Le sous-ensemble d'équilibrage 16 oppose lui-même une résistance qui peut être proportionnelle au carré de sa vitesse de rotation, grâce au mécanisme auxiliaire entraîné par la poulie 18, et une résistance aux accélérations grâce au volant d'inertie 17. Ainsi, à chaque instant, la boite de vitesses tend à établir entre l'arbre d'entrée 1 et l'arbre de sortie 14 un rapport de transmission correspondant à l'équilibre des deux forces s'exerçant sur la périphérie de chaque satellite.

Il importe de noter que lorsque ces deux forces sont égales, les couples transmis à la roue planétaire 11 et à la couronne 9 sont très différents puisque le diamètre de la roue planétaire 11 est très inférieur à celui de la denture intérieure 8 de la couronne 9. Ce rapport peut être de 1 à 10 par exemple. Ainsi, dans les conditions d'équilibre, la puissance transmise à l'arbre de sortie là peut être très supérieure à la puissance transmise au mécanisme d'équilibrage 16.

Lors du démarrage du moteur et au ralenti, la vitesse de rotation de l'arbre 1 est faible. Le couple moteur sur l'arbre d'entrée 1 fait tourner le sous-ensemble d'équilibrage 16 par l'intermédiaire des satelliter 7 qui roulent sur la roue planétaire 11, qui demeure immobile grâce à la résistance à l'avancement du véhicule, complétée le cas échéant par le frein de stationnement. La vitesse de rotation du sous-ensemble d'équilibrage 16 devient au contraire relativement élevée, par exemple 5 000 t/mn, environ dix fois supérieure à celle de l'arbre 1 dans l'exemple précédent. Des moyens peuvent être prévus pour limiter ou supprimer à ce stade la résistance transmise par l'intermédiaire de la poulie 18, de façon à limiter ou supprimer la force transmise inutilement à l'arbre de sortie là tant que le conducteur du véhicule ne désire pas que le démarrage du véhicule ait lieu. On peut également faire en sorte qu'à cette vitesse de rotation de l'arbre 19, la résistance à la rotation du mécanisme auxiliaire soit relativement faible.

Pour obtenir la mise en mouvement du véhicule, on desserre le frein de stationnement et on rétablit la résistance mécanique transmise à la poulie 18 si cette résistance avait été supprimée lors du fonctionnement au ralenti. Un couple est désormais transmis à l'arbre de sortie là. On peut l'accroître à volonté en augmentant la vitesse de rotation de l'arbre d'entrée 1, de manière à accroître la réaction transmise à la roue planétaire 11 par le volant 17 et la poulie 18, et à faire passer le mécanisme auxiliaire à une vitesse de rotation plus élevée pour laquelle sa résistance à la rotation devient notable. Le véhicule se met en mouvement progressivement sans que l'on ait dû faire intervenir un quelconque mécanisme à friction.

Une fois la voiture en mouvement, le couple nécessaire pour entretenir le mouvement diminue et par conséquent la puissance du moteur acheminée par le train planétaire est transmise de plus en plus vers l'arbre de sortie là de la boîte de vitesses 2. La vitesse de rotation du volant 17 diminue et une partie de son énergie cynétique stockée est restituée à l'arbre de sortie là. Par conséquent, la boîte de vitesses modifie automatiquement et de façon continue le rapport de vitesse entre l'arbre d'entrée 1 et l'arbre de sortie là. Il n'y a ni valeur maximale ni valeur minimale de ce rapport.

Le rapport peut varier à tout moment, en fonction simultanément du couple et de la puissance fournis par le moteur 3 sous la commande du conducteur, et de la résistance au déplacement du véhicule. Lorsque le couple résistant est élevé, par exemple en côte ou en accélération, la vitesse de rotation du sous-ensemble d'équilibrage 16 s'élève pour équilibrer le couple résistant sur l'arbre de sortie 14, et par conséquent la vitesse de rotation de l'arbre 14 diminue par rapport à celle de l'arbre d'entrée 1. Il en va de même lorsque l'on applique au véhicule une force de freinage ou même simplement lorsqu'on relâche la pédale d'accélérateur du véhicule. Le véhicule ralentit et s'arrête avec le moteur en marche, le sous-ensemble 16 étant à son régime de rotation relativement élevé évoqué plus haut en ce qui concerne le fonctionnement au ralenti. Ce fonctionnement à régime élevé implique que le volant 17 a récupéré de l'énergie cinétique du véhicule lors de la phase de ralentissement, et cette énergie est disponible pour le redémarrage ou la réaccélération qui va suivre.

Selon un exemple non limitatif, un moteur fonctionnant selon le cylcle à quatre temps avec une cylindrée de 1 000 et 1 500 cm³ et une puissance de 70 kW à 6 000 t/mn, et un couple maximum de 150 Nm à 3 000 t/mn nécessite un volant d'environ 250 à 300 mm de diamètre, d'un poids de l'ordre de 15 à 18 kg, tournant à environ 7 000 t/mn au maximum si le poids à vide de la voiture est d'environ 1 000 kg.

Dans le cas d'une motocyclette avec un moteur d'environ 1 000 cm³ développant 70 kW à 10 000 t/mn avec un couple maximum de 150 Nm à 4 800 t/mn, le volant a environ 230 à 250 mm de diamètre, pèse environ 10 kg et peut tourner jusqu'à 10 000 t/mn au maximum si le poids à vide de la motocyclette est d'environ 250 kg.

En d'autres termes, ce volant est plutôt moins lourd et moins volumineux que celui-ci qui est habituellement couplé au vilebrequin des moteurs thermiques. De plus le volant de la boîte de vitesses selon l'invention remplace le volant habituellement prévu sur les moteurs thermiques, et confère au ralenti du moteur thermique une stabilité exceptionnelle compte tenu de son très haut régime de rotation lorsque le moteur tourne au ralenti véhicule à l'arrêt.

Compte tenu de la vitesse de rotation élevée du volant lorsque le véhicule est à l'arrêt et le moteur au ralenti, il est possible de coupler directement le démarreur à l'arbre 19 du sous-ensemble 16. On supprime ainsi les problèmes de couplage temporaire entre le démarreur et le volant d'inertie. On sait que les solutions actuelles pour ce couplage temporaire sont particulièrement sujettes à usure.

On peut envisager de coupler à l'arbre 19 la génératrice électrique du véhicule, et que cette génératrice puisse fonctionner en moteur servant de démarreur lors de la mise en route du moteur thermique 3.

On va maintenant décrire d'autres modes de réalisation de l'invention, en reprenant les mêmes références numériques pour désigner les éléments fonctionnellement analogues à ceux de la figure 1.

Dans le mode de réalisation selon la figure 1, c'est pour des raisons de clarté de l'exposé qu'on a relié directement la roue planétaire 11 au compensateur 16, et qu'on a au contraire raccordé la couronne 9 avec l'arbre de sortie 14 par l'intermédiaire d'un pignon 13.

Cependant, comme représenté à la figure 2, il est préférable de faire l'inverse, c'est-à-dire de raccorder directement la couronne 9 avec l'arbre de sortie 14 qui se trouve donc coaxial avec l'arbre d'entrée 1, et qui constitue l'arbre d'entrée d'un différentiel classique 21. Une cloche 22 raccorde la couronne 9 rigidement à l'arbre 14. Le porte-satellites 6 est disposé entre la cloche 22 et la roue planétaire 11, laquelle est raccordée par un tube 23 entourant l'arbre d'entrée 1 à une roue dentée 24 de relativement grand diamètre engrenant avec un pignon 26 de relativement petit diamètre solidaire de l'arbre 19 du sous-ensemble compensateur 16. Le volant d'inertie 17 est donc désormais excentré par rapport à l'arbre d'entrée 1. On a représenté à l'extrémité libre de l'arbre 16 la génératrice électrique 27 pouvant servir de démarreur, un ventilateur 28, et un compresseur mécanique de suralimentation 29 pour illustrer que l'un et/ou l'autre de ces trois accessoires peuvent être couplés à l'arbre 16 à titre de charge consommatrice d'énergie opposant une résistance à la rotation de la roue planétaire 11 même lorsque celle-ci tourne à vitesse constante.

On remarque que la roue dentée 24 et le pignon 26 constituent un multiplicateur de la vitesse de rotation du sous-ensemble d'équilibrage 16 par rapport à celle de la roue planétaire 11. Autrement dit, le couple résistant de la roue planétaire 11 est multiplié par rapport à celui de l'arbre 19. Ceci accroît avantageusement la force périphérique transmise par la roue planétaire 11 aux satellites 7. Il est donc encore plus facile que dans l'exemple précédent de parvenir à ce qu'une charge d'équilibrage relativement faible en couple et en puissance produise à la périphérie de la roue planétaire 11 une force de réaction capable d'équilibrer celle transmise par l'arbre 14 à la denture intérieure 8 de la couronne 9 du train planétaire.

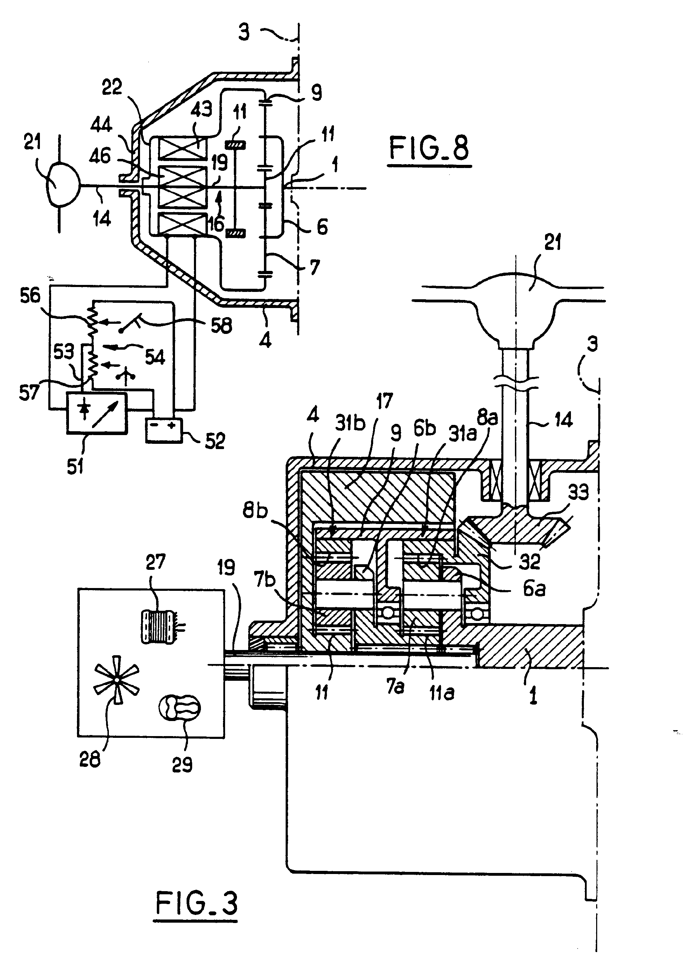

Dans l'exemple représenté à la figure 3, le volant 17 et l'arbre 19 sont coaxiaux avec l'arbre d'entrée 1, comme dans l'exemple de la figure 1. Toutefois pour éviter l'emploi de satellites de grand diamètre qui sont nécessaires dans l'exemple de la figure 1 pour réaliser le rapport de 10 entre le nombre de dents de la denture 8 de la couronne 9 et le nombre de dents de la roue planétaire 11, le train d'engrenages planétaire comprend deux trains planétaires individuels montés en série, 31a et 31b. Le porte-satellites 6a du premier train 31a est relié rigidement à l'arbre d'entrée 1. Il porte des satellites 7a qui engrènent d'une part avec une première denture intérieure 8a de la couronne 9 et d'autre part avec une roue planétaire intermédiaire 11a qui est solidaire en rotation du porte-satellites 6b du second train 31b. Les satellites 7b portés par le porte-satellites 6b engrènent avec une seconde denture intérieure 8b de la couronne 9, de même diamètre et même nombre de dents que la denture 8a, et avec la roue planétaire 11 du second train 31b, laquelle est solidaire, de l'arbre 19 du sous-ensemble d'équilibrage La couronne 9 est solidaire d'une roue dentée conique 32 engrenant avec un pignon conique 33 solidaire de l'arbre de sortie 14 qui s'étend perpendiculairement à l'arbre d'entrée 1 et à l'arbre 19 du sous-ensemble d'équilibrage, ce qui peut être intéressant pour les véhicules à moteur disposé transversalement. Le pourtour massif du volant 17 enveloppe périphériquement la couronne 9.

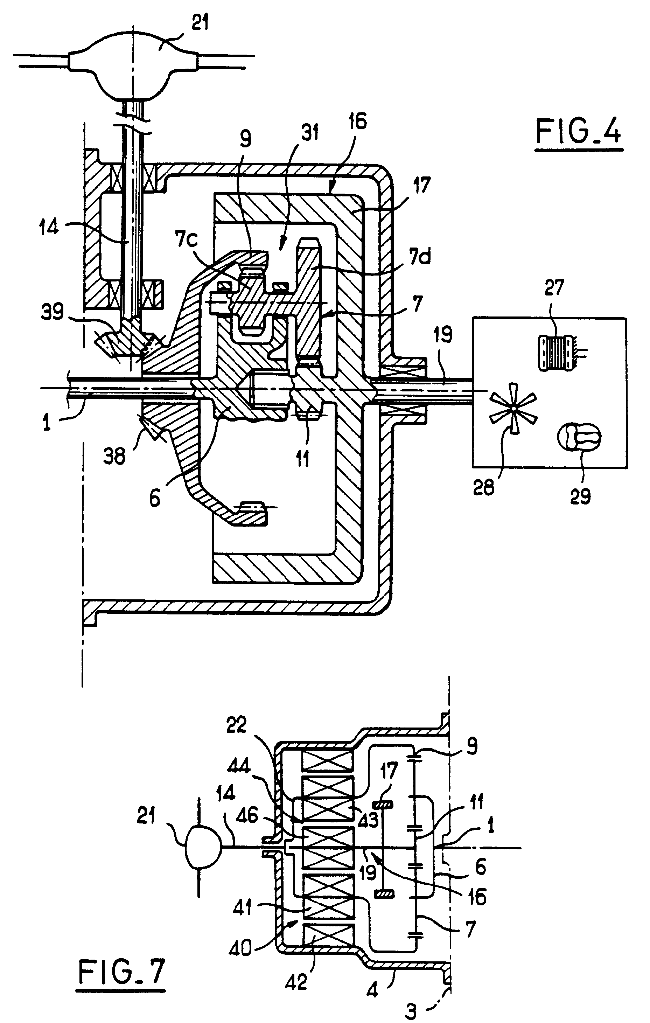

L'exemple de réalisation représenté à la figure 4 correspond à celui de la figure 3 excepté que le train d'engrenages à deux trains individuels est remplacé par un train unique 31 dont le porte-satellites 6 porte des satellites 7 composés chacun de deux pignons individuels, l'un 7c de relativement petit diamètre engrenant avec la couronne 9 et l'autre 7d de relativement grand diamètre engrenant avec la roue planétaire 11 solidaire de l'arbre 19 et du volant 17. Ainsi, la force de réaction transmise périphériquement aux satellites 7 par l'intermédiaire de la roue planétaire 11 a autour de l'axe de chaque satellite 7 un bras de levier plus grand que la force de réristance transmise aux satellites 7 par la couronne 9. Ainsi, un couple relativement faible sur l'arbre 19 est, cette fois encore, capable d'équilibrer un couple relativement important sur la couronne 9.

Il est intéressant de noter que plus on augmente par des moyens de transformation mécanique tels que le multiplicateur de vitesses 24, 26 de la figure 2, le double train planétaire 31a, 31b de la figure 3, ou les satellites à deux pignons individuels 7c et 7d de la figure 4, l'influence du couple résistant sur l'arbre 19 par rapport à celle de la couronne 9, autour de l'axe de chaque satellite 7, et plus on permet au système de fonctionner avec des vitesses relativement faibles de l'arbre 19.

C'est-à-dire que, considérant l'exemple de la figure 2, la présence du multiplicateur de vitesses 24, 26 ne se traduit pas par une augmentation de la vitesse de rotation de l'arbre 19 par rapport au cas de la figure 1, mais au contraire par une diminution de cette vitesse, la vitesse de rotation de la roue planétaire 11 étant encore davantage diminuée par rapport au cas de la figure 1.

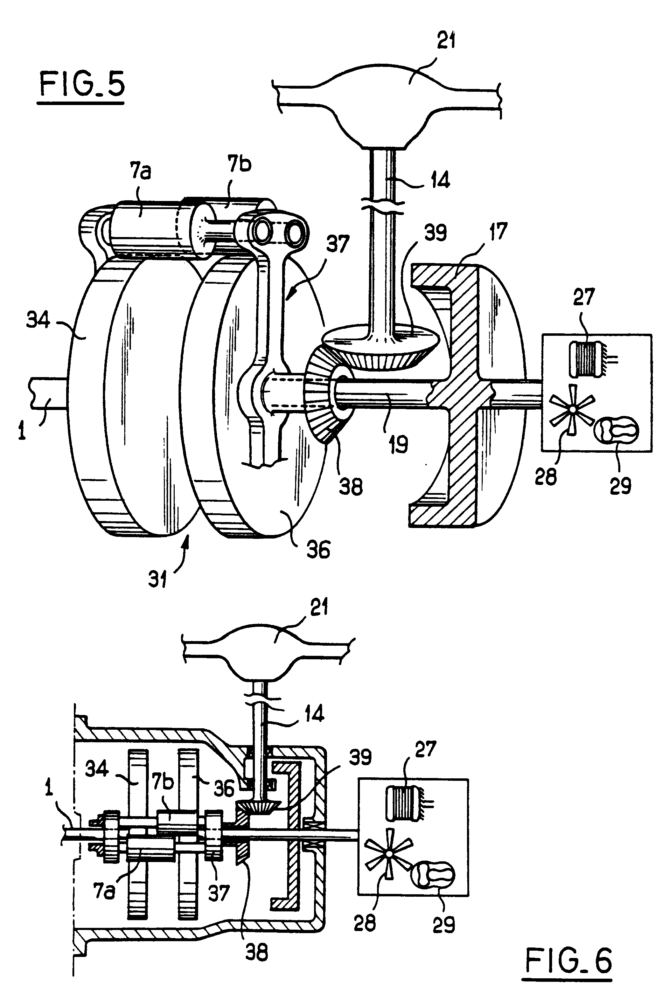

Dans l'exemple des figures 5 et 6, le train d'engrenages 31 est constitué par un mécanisme du type dit "différentiel cylindrique". Il comprend une roue planétaire d'entrée 34 reliée rigidement à l'arbre d'entrée 1, et une roue planétaire de sortie 36 solidaire de l'arbre 19 coaxial à l'arbre 1. Les roues planétaires 34 et 36 ont chacune une denture extérieure cylindrique. Un porte-satellites 37 est solidaire d'un pignon conique 38 engrenant avec un pignon conique 39, de bien plus grand diamètre, solidaire de l'arbre de sortie 14 de la boîte de vitesses. Le porte-satellites 37 porte au moins une paire de satellites 7a et 7b engrenant entre eux et engrenant chacun avec l'un des planétaires 34 et 36 respectivement. Grâce au grand diamètre du pignon 39, le couple résistant sur l'arbre 14 est transmis réduit au porte-satellites, ce qui permet l'équilibre avec le couple résistant du sous-ensemble d'équilibrage.

Dans l'exemple représenté à la figure 7, qui ne sera décrit qu'en ce qui concerne ses différences par rapport à celui de la figure 1, la couronne 9 est couplée à l'arbre de sortie 14 par l'intermédiaire d'une cloche 22 dont la face extérieure porte les éléments d'un rotor 41 d'un moteur électrique 40 dont le stator 42, entourant le rotor 41, est fixé à la face intérieure du boîtier 4.

La face intérieure de la cloche 22 porte un pseudo-stator 43 d'une seconde machine dynamo-électrique 44 dont le rotor 46, entouré par le pseudo-stator 43, est solidaire de l'arbre 19 du mécanisme d'équilibrage 16.

La machine dynamo-électrique 44 fonctionne en moteur pour la mise en route du moteur thermique 1 comme exposé précédemment, et en génératrice formant charge consommatrice d'énergie associée au sous-ensemble d'équilibrage 16 lors du fonctionnement pour régler le rapport de transmission entre l'arbre d'entrée 1 et l'arbre de sortie 14 de la boîte de vitesses.

On parle de pseudo-stator 43 et non tout simplement de stator 43 car le pseudo-stator 43 joue électriquement le rôle d'un stator relativement au rotor 46 lié à l'arbre 19, mais tourne avec la cloche 22.

Lorsque la machine 44 fonctionne en génératrice électrique, on règle la puissance qu'elle founit, par exemple son excitation, de manière à créer sur l'arbre 19 un couple résistant ayant la valeur souhaitée compte tenu ces conditions de marche du véhicule. Le courant excédentaire éventuellement produit par la machine 44 est envoyé au moteur 40 où il est transformé en énergie mécanique transmise à l'arbre de sortie 14.

La puissance produite par la machine 44 peut être réglée en tenant compte de divers paramètres de marche du véhicule. Par exemple, si le conducteur demande la puissance maximale du moteur, il souhaite généralement aussi que la boître de vitesses assure un rapport de démultiplication permettant au moteur de fonctionner à régime relativement élevé au voisinage de la puissance nominale. On peut dans ce cas faire fonctionner la machine 44 selon une caractéristique correspondant à un couple mécanique résistant relativement faible pour permettre à l'arbre d'entrée 1 de prendre une vitesse de rotation plus importante par rapport à celle de l'arbre 14.

Dans la réalisation représentée à la figure 8, le moteur 40, c'est-à-dire le rotor 41 et le stator 42, sont supprimés. La génératrice 44 est alors commandée de manière à faire varier le couple résistant qu'elle transmet à l'arbre 19 du sous-ensemble d'équilibrage, ce qui, compte tenu de la puissance électrique demandée par le réseau électrique du véhicule, détermine une certaine vitesse relative entre les arbres 19 et 14. Le couple de réaction qui est opposé par le pseudo-stator 43 constitue un couple moteur additionnel transmis à la cloche 22 et par conséquent à l'arbre de sortie 14.

En d'autres termes, on sait que la puissance mécanique est égale au produit du couple multiplié par la vitesse de rotation. Si l'on désire que l'arbre de sortie 14 tourne relativement vite par rapport à l'arbre d'entrée 1, on commande la machine 44 de façon que son couple électro-magnétique augmente, ce qui fait augmenter la résistance à la rotation opposée par la roue planétaire 11, et fait par conséquent augmenter la vitesse de l'arbre de sortie 14, c'est-à-dire la vitesse de rotation du pseudo-stator 43. Dans ces conditions, la vitesse relative du rotor 46 par rapport au pseudo-stator 43 a diminué, mais le couple électro-magnétique ayant augmenté, la puissance fournie est demeurée sensiblement constante, égale à celle demandée par le réseau.

Ainsi, la puissance de réaction transmise à l'arbre 19 par la machine 44 est toujours égale à la puissance électrique demandée par le réseau augmentée de la puissance mécanique restituée par le pseudo-stator 43 à la cloche 22 et à l'arbre de sortie 14.

Dans l'exemple représenté à la figure 8, un dispositif de réglage à thyristors 51 est monté en série avec la batterie d'accumulateurs 52 du véhicule entre les bornes de puissance de la génératrice 44. Le dispositif de réglage à thyristors 51 règle la force électromagnétique de la génératrice en fonction de la tension appliquée à une entrée de commande 53. La tension d'entrée 53 est la tension à la prise médiane d'un diviseur de tension 54 composé de deux résistances variables 56, 57. La valeur de la résistance 56 est fonction de la pression sur la pédale d'accélérateur 58 du véhicule. La valeur de la résistance 57 est fonction de la vitesse de rotation de l'arbre de sortie 14. Plus la pression sur la pédale d'accélérateur est forte et plus le couple électromagnétique est réduit pour augmenter le rapport de démultiplication dans la boîte de vitesses (réduire la vitesse de l'arbre de sortie 14 par rapport à celle de l'arbre d'entrée 1). Plus la vitesse de l'arbre de sortie 14 est importante, et plus le dispositif 51 commande l'accroissement du couple électromagnétique de la génératrice 44 pour réduire le rapport de démultiplication dans la boîte de vitesses.

En variante, par rapport à chacun des modes de réalisation décrits, on peut supprimer le volant 17 si le moment d'inertie des accessoires entraînés par le sous-ensemble d'équilibrage est suffisant, compte-tenu en particulier de leur vitesse de rotation. Il existe par exemple des compresseurs de suralimentation centrifuges tournant à des vitesses très élevées et qui par conséquent, bien que relativement légers, sont capables d'opposer la rotation de l'arbre 19 une inertie importante.

## Revendications

1. Boîte de vitesses à variation automatique du rapport de transmission, en particulier pour véhicules, comprenant un train d'engrenages (7, 8, 11 ; 7a, 7b, 8a, 8b, 11a ; 7c,, 7d ; 34, 36) de liaison entre un arbre d'entrée (1) et un arbre de sortie (14) ce train d'engrenages comprenant au moins une roue dentée (7 ; 7a, 7b, 7c, 7d) qui est montée pour répartir la puissance entre l'arbre de sortie (14) et un sous-ensemble d'équilibrage (16) tournant à une vitesse généralement différente de celle de l'arbre de sortie (14), des moyens (18 ; 27, 28, 29 ; 44) autres que la roue dentée (7 ; 7a, 7b) étant prévus pour prélever de l'énergie utile au sous-ensemble d'équilibrage (16), caractérisée en ce que la charge constituée par le sous-ensemble d'équilibrage est en permanence, en fonction de la vitesse et de l'accélération, en rapport avec la charge entraînée par l'arbre de sortie, en fonction de la vitesse et de l'accélération.

2. Boîte de vitesses selon la revendication 1, caractérisée en ce que les moyens pour prélever de l'énergie au sous-ensemble d'équilibrage (16) comprennent une charge consommatrice d'énergie (18 ; 27, 28, 29 ; 44), en particulier un mécanisme auxiliaire tel que compresseur de suralimentation (29), ventilateur (28), pompe à eau de refroidissement, génératrice électrique (27, 44).

3. Boîte de vitesses selon l'une des revendications 1 ou 2, caractérisée en ce que le sous-ensemble d'équilibrage (16) comporte une charge inertielle (17).

4. Boîte de vitesses selon l'une des revendications 1 à 3, caractérisée en ce que les moyens pour prélever de l'énergie au sous-ensemble d'équilibrage (16) comprennent des moyens (44, 40) pour transmettre de l'énergie depuis le sous-ensemble d'équilibrage (16) vers l'arbre de sortie (14).

5. Boîte de vitesses conforme à la revendication 4, caractérisée en ce que les moyens pour transmettre de l'énergie comprennent un générateur (44) entraîné par le sous-ensemble (16):

6. Boîte de vitesses selon l'une des revendications 1 à 5, caractérisée par des moyens (51, 54) pour régler la quantité d'énergie prélevée au sous-ensemble d'équilibrage (16) en vue d'influer sur le rapport de transmission entre l'arbre d'entrée (1) et l'arbre de sortie (14).

7. Boîte de vitesses conforme à l'une des revendications 1 à 6, caractérisée en ce que le sous-ensemble d'équilibrage (16) engrène avec la roue dentée (7) par l'intermédiaire de moyens (24, 26) multiplicateurs de la vitesse de rotation du sous-ensemble d'équilibrage.

8. Boîte de vitesses selon l'une des revendications 1 à 7, caractérisée en ce que le train d'engrenages est du type planétaire et comprend un porte-satellites (6) relié à l'arbre d'entrée (1), une couronne (9) reliée à l'arbre de sortie, et une roue planétaire (11) reliée au sous-ensemble d'équilibrage (16).

9. Boîte de vitesses conforme à la revendication 8, caractérisée en ce que le porte-satellites (6) porte des satellites doubles (7a, 7b) comprenant chacun un pignon (7c) de diamètre relativement petit engrenant avec la couronne (9) et un pignon (7d) de diamètre relativement grand, couplé en rotation au pignon de diamètre relativement petit (7c) et engrenant avec la roue planétaire (11).

10. Boîte de vitesses conforme à la revendication 8, caractérisée en ce que le train d'engrenages de type planétaire comprend deux trains planétaires (31a, 31b) montés en série.

11. Boîte de vitesses conforme à l'une des revendications 1 à 7, caractérisée en ce que le train d'engrenages est du type différentiel cylindrique, comprenant une roue planétaire d'entrée (34) reliée à l'arbre d'entrée (1), une roue planétaire de sortie (36) reliée au sous-ensemble d'équilibrage (16) et un porte-satellites (37) relie à l'arbre de sortie (14), le porte-satellites portant au moins une paire de satellites (7a, 7b) engrenant entre eux et chacun avec l'un des planétaires (34, 36).

12. Boîte de vitesses conforme à la revendication 11, caractérisée en ce qu'un démarreur (27, 44) est couplé au sous-ensemble d'équilibrage (16).

13. Boîte de vitesses conforme à la revendication 12, caractérisée en ce que le démarreur (27, 44) est un moteur réversible pouvant fonctionner en générateur prélevant de l'énergie au sous-ensemble d'équilibrage (16) lorsque l'arbre d'entrée (1) de la boîte de vitesses reçoit de l'énergie mécanique.

## Patentansprüche

1. Getriebe zur automatischen Variation des Transmissionsverhältnisses, insbesondere für fahrzeuge, mit einem Zahnradgetriebe (7, 8, 11; 7a, 7b, 8a, 8b, 11a; 7c, 7d; 34, 36) zwischen einer Eingangswelle (l) und einer Abtriebswelle (14), das wenigstens ein Zahnrad (7; 7a, 7b, 7c, 7d), das zur Kraftverteilung zwischen der Abtriebswelle (14) und einem Gleichgewichts-Teilsystem (16), das mit einem im allgemeinen von der Drehgeschwindigkeit der Abtriebswelle (14) verschiedenen Geschwindigkeit rotiert, angeordnet ist, und außer dem Zahnrad (7; 7a, 7b) eine weitere Einrichtung (18; 27, 28, 29; 44) zur Abnahme von Nutzenergie von dem Gleichgewichts-Teilsystem (16) aufweist, **dadurch gekennzeichnet, daß** die durch das Gleichgewichts-Teilsystem gebildete Belastung in Abhängigkeit von der Geschwindigkeit und der Beschleunigung ständig im Verhältnis zur in Abhängigkeit von Geschwindigkeit und Beschleunigung durch die Abtriebswelle ausgeübten Belastung gehalten wird.

2. Getriebe nach Anspruch 1, dadurch gekennzeichnet, daß die Einrichtung zur Abnahme der Energie von dem Gleichgewichts-Teilsystem (16) eine Energie verbrauchende Last (18; 27, 28, 29; 44) ist, insbesondere eine Hilfseinrichtung wie ein Ladekompressor (29), ein Ventilator (28), eine Kühlwasserpumpe oder ein elektrischer Generator (27, 44).

3. Getriebe nach Anspruch 1 oder 2, dadurch gekennzeichnet, daß das Gleichgewichts-Teilsystem (16) eine träge Last (17) aufweist.

4. Getriebe nach einem der Ansprüche 1 bis 3, dadurch gekennzeichnet, daß die Einrichtung zur Abnahme von Energie aus dem Gleichgewichts-Teilsystem (16) eine Einrichtung (44, 40) zur Übertragung von Energie von dem Gleichgewichts-Teilsystem (16) auf die Abtriebswelle (14) aufweist.

5. Getriebe nach Anspruch 4, dadurch gekennzeichnet, daß die Einrichtung zur Übertragung von Energie einen durch das Teilsystem (16) angetriebenen Generator (44) aufweist.

6. Getriebe nach einem der Ansprüche 1 bis 5, gekennzeichnet durch Mittel (51, 54) zur Regelung der von dem Gleichgewichts-Teilsystem abgenommenen Energiemenge zur Einwirkung auf das Transmissionsverhältnis zwischen Eingangswelle (1) und Abtriebswelle (14).

7. Getriebe nach einem der Ansprüche 1 bis 6, dadurch gekennzeichnet, daß das Gleichgewichts-Teilsystem (16) über Mittel (24, 26) zur Mutiplizierung der Rotationsgeschwindigkeit des Gleichgewichts-Teilsystem mit dem Zahnrad (7) im Eingriff steht.

8. Getriebe nach einem der Ansprüche 1 bis 7, dadurch gekennzeichnet, daß das Zahnradgetriebe ein Planetengetriebe ist und einen mit der Eingangswelle (1) verbundenen Satelitenträger (6), einen mit der Abtriebswelle (14) verbundenen Kranz (9) und ein mit dem Gleichgewichts-Teilsystem (16) verbundenes Planetenrad (11) aufweist.

9. Getriebe nach Anspruch 8, dadurch gekennzeichnet, daß der Satelitenträger (6) doppelte Sateliten (7a, 7b), die jeder ein mit dem Kranz (9) in Eingriff stehendes Ritzel (7c) mit einem relativ kleinen Durchmesser und ein drehfest mit dem qennanten Ritzel (7c) verbundenes, mit dem Planetenrad (11) im Eingriff stehendes Ritzel (7d) aufweisen, das ein relativ grossen Durchmesser hat..

10. Getriebe nach Anspruch 8, dadurch gekennzeichnet, daß das Planetengetriebe zwei in Serie angeordnete Planetenanordnungen (31a, 31b) aufweist.

11. Getriebe nach einem der Ansprüche 1 bis 7, dadurch gekennzeichnet, daß das Zahnradgetriebe ein zylindrisches Differenzialgetriebe ist, das ein mit der Eingangswelle (1) verbundenes Eingangs-Planetenrad (34), ein mit dem Gleichgewichts-Teilsystem (16) verbundenes AusgangsPlanetenrad (36) und einen mit der Abtriebswelle (14) verbundenen Satelitenträger (37) aufweist, wobei der Satelitenträger wenigstens ein Paar Satelitenräder (7a, 7b) aufweist, die miteinander und jeder mit einem der Planetenräder (34, 36) kämmen.

12. Getriebe nach Anspruch 11, dadurch gekennzeichnet, daß ein Anlasser (27, 44) mit dem Gleichgewichts-Teilsystem (16) gekoppelt ist.

13. Getriebe nach Anspruch 12, dadurch gekennzeichnet, daß der Anlasser (27, 44) ein umkehrbarer Motor ist, der als dem Gleichgewichts-Teilsystem (16) Energie entnehmender Generator arbeitet, wenn die Eingangswelle (1) des Getriebes mechanische Energie erhält.

## Claims

1. Transmission with automatically variable transmission ratio, particularly for vehicles, comprising a gear train (7, 8, 11; 7a, 7b, 8a, 8b, 11a; 7c, 7d; 34, 36) interconnecting an input shaft (1) and an output shaft (14) this gear train comprising at least one toothed wheel (7; 7a, 7b, 7c, 7d) which is mounted to distribute the power between the output shaft (14) and a balancing subassembly (16) turning at a speed generally different from that of the output shaft (14), means (18; 27, 28, 29; 44) other than the toothed wheel (7; 7a, 7b) being provided to withdraw useful energy from the balancing subassembly (16), characterized in that the load constituted by the balancing subassembly is permanently, as a function of speed and acceleration, related to the load driven by the output shaft, as a function of speed and acceleration.

2. Transmission according to claim 1, characterized in that the means to withdraw energy from the subassembly (16) comprises an energy consuming load (18; 27, 28, 29; 44), particularly an auxiliary mechanism such as a supercharging compressor (29), fan (28), cooling water pump, electrical generator (27, 44).

3. Transmission according to one of claims 1 or 2, characterized in that the balancing subassembly (16) comprises an inertial load (17).

4. Transmission according to one of claims 1 to 3, characterized in that the means to withdraw energy from the balancing subassembly (16) comprises means (44, 40) to transmit energy from the balancing subassembly (16) to the output shaft (14).

5. Transmission according to claim 4, characterized in that the means to transmit energy comprises a generator (44) driven by the subassembly (16).

6. Transmission according to one of claims 1 to 5, characterized by means (51, 54) to adjust the quantity of energy withdrawn from the balancing subassembly (16) so as to alter the transmission ratio between the input shaft (1) and the output shaft (14).

7. Transmission according to one of claims 1 to 6, characterized in that the balancing subassembly (16) meshes with the toothed wheel (7) by way of means (24, 26) for multiplying the speed of rotation of the balancing subassembly.

8. Transmission according to one of claims 1 to 7, characterized in that the gear train is of the planetary type and comprises a planet carrier (6) connected to the input shaft (1), a ring gear (9) connected to the output shaft, and a sun wheel (11) connected to the balancing subassembly (16).

9. Transmission according to claim 8, characterized in that the planet carrier (6) carries twin planet wheels (7a, 7b) each comprising a pinion (7c) of relatively small diameter meshing with the ring gear (9) and a pinion (7d) of relatively great diameter connected in rotation to the pinion of relatively small diameter (7c) and meshing with the sun wheel (11).

10. Transmission according to claim 8, characterized in that the gear train of the planetary type comprises two planetary trains (31a, 31b) mounted in series.

11. Transmission according to one of claims 1 to 7, characterized in that the gear train is of the cylindrical differential type, comprising an input sun wheel (34) connected to the input shaft (1), an output sun wheel (36) connected to the balancing subassembly (16) and a planet carrier (37) connected to the output shaft (14), the planet carrier having at least one pair of planet wheels (7a, 7b) meshing with each other and each meshing with one of the sun wheels (34, 36).

12. Transmission according to claim 11, characterized in that a starter (27, 44) is coupled to the balancing subassembly (16).

13. Transmission according to claim 12, characterized in that the starter (27, 44) is a reversible motor that can function as a generator withdrawing energy from the balancing subassembly (16) when the input shaft (1) of the transmission receives mechanical energy.

FIG_1

FIG_2

FIG.8

FIG.3

FIG.4

FIG.7

## FIG.5

## FIG.6